# EUROPÄISCHE PATENTSCHRIFT

(11) **EP 1 741 764 B1**
(45) Veröffentlichungstag und Bekanntmachung des Hinweises auf die Patenterteilung: **27.05.2009**
(21) Anmeldenummer: 06116392.9
(22) Anmeldetag: 30.06.2006
(51) Int. Cl.: C09J 7/04, D04H 11/08

(54) **Auf sich selbst wickelbares Klebeband und Verfahren zu seiner Herstellung**
Self-winding adhesive tape and method for its manufacture
Ruban adhésif enroulable sur lui-même et son procédé de fabrication

(30) Priorität: 08.07.2005 DE 202005010889 U
(43) Veröffentlichungstag der Anmeldung: 10.01.2007
(73) Patentinhaber: Coroplast Fritz Müller GmbH & Co. KG, 42279 Wuppertal (DE)
(72) Erfinder: Lodde, Christoph, 44229, Dortmund (DE); Frigge, Christoph, 45549, Sprockhövel (DE)
(74) Vertreter: Patentanwälte Dr. Solf & Zapf

(56) Entgegenhaltungen:
- EP-A- 1 149 882
- DE-A1- 10 039 983
- DE-A1- 10 113 425

## Beschreibung

Die vorliegende Erfindung betrifft ein auf sich selbst wickelbares textiles Klebeband mit einem Träger, der aus einem verfestigten, aus Fasern gebildeten Vlies besteht, und mit einer auf einer Seite des Trägers aufgebrachten, insbesondere druckempfindlichen. Klebstoffbe schichtung nach dem Oberbegriff des Anspruchs 1.

Kabelsätze werden, insbesondere im Automobilbereich, gewöhnlich mit Klebebändern umwickelt. Neben der reinen Bündelungsfunktion haben dabei vor allem textile Klebebänder mittlerweite zahlreiche Zusatzfunktionen, wie den Schutz der Leitungen vor Abrieb oder die Dämpfung von Klapper- oder Vibrationsgeräuschen, übernommen. Weit verbreitet sind Gewebeklebebänder aus Zellwolle oder Polyester, Veloursbänder aus Polyester und Polyamid und verschiedene, meist ebenfalls auf Polyester basierende Vliesklebebänder.

Damit Vliesklebebänder auf sich selbst gewickelt werden können, ohne dass es beim Abwickeln zu Faserausrissen kommt, muß der Vliesträger verfestigt werden. Dafür sind unterschiectiche Verfahren bekannt.

So beschreibt die EP-B-0 668 336 eine Vlies-Verfestigung durch ein Übernähen. insbesondere ein Klebeband zum Aufrollen zu einer Klebebandrolle und zum Abrollen von dieser, welches aus einem bandförmigen, textilen Träger und einer auf dem Träger einseitig aufgebrachten Klebebeschichtung aus einem druckempfindlichen Haftkleber besteht, wobei der bandförmige textile Träger aus einem Nähvlies besteht das aus einem Vliesmaterial mit einer Vielzahl parallel zueinander verlaufender, eingenähter Nähte gebildet ist, so dass sich eine Oberfläche aus Tälern und Erhebungen von Naht zu Naht ergibt

Vliesklebebander zeichnen sich durch ein gutes Preis-Leistungsverhältnis aus und sind im Falle der Nähvliesbänder gut handreißbar und damit ebenso vorteilhaft zu verarbeiten wie Zellwoll-Gewebebänder. Auf Grund ihrer überlegenen Eigenschaften haben die Nähvliesbänder die Zellwoll-Gewebebänder heute in weiten Bereichen verdrängt.

Neben der für Klebebänder weit verbreiteten Verfestigungsart des Übernähens kommen auch Bänder auf der Basis von Vliesen mit anderen Verfestigungsarten zum Einsatz. So beschreibt die EP-B-1 123 958 die Verwendung eines Klebebandes als Wickelband zur Bündelung von Kabeln in Automobilen, wobei das Klebeband einen bandförmigen Vliesträger mit einer ein- oder beidseitig aufgebrachten Kleberbeschichtung aufweist und wobei der Vliesträger durch Luft- und/oder Wasserstrahlen verfestigt ist. Die Reissdehnung des Vliesträgers liegt dabei unterhalb von 50 Prozent.

Die EP-B-1 081 202 beschreibt ein Klebeband, das einen Vliesträger und eine Klebstoffschicht umfasst, die eine Seite des Trägers bedeckt. Die Vliesfasern sind durch Nadeln verfestigt. Das Band ist in direktem Kontakt zwischen dem Klebstoff und dem Träger einer benachbarten Wickellage zusammengerollt. Der Träger weist eine Dicke von 0,3 bis 1 mm und eine Oberflächenmasse der Fasern von 70 bis 120 g/m² auf, und die Fasern sind im Klebstoff auf einem Teil der Dicke des Trägers von 10 µm bis 0,5 mm eingetaucht. Auch dadurch kommt eine weitere Verfestigung des Vlieses zustande.

Bei Verwendung von Velours-Klebebändern können die Kabelsätze mit Hilfe geeigneter an der Karosserie befestigter Hakenteile im Klettverfahren verlegt werden. Als Trägermaterial werden üblicherweise Velours mit Flächengewichten von etwa 120 - 200 g/m² eingesetzt. Hierzu ist festzustellen, dass sich textile Flächengebilde grundsätzlich in Flach- oder Glattwaren, zu denen in der Regel Gewebe, Vliese, glatte Gewirke gezählt werden, und in Flor- oder Polwaren, unter denen Velours, Samt, Plüsch etc. verstanden werden, einteilen lassen. Bei den vorgenannten Trägermaterialien für Klebebänder handelt es sich um Velours, die über einen Pol- oder Faserflor verfügen. Sie werden daher auch als Polstoffe bezeichnet, welche entsprechend der DIN 62055 als textile Flächengebilde mit ein- oder beidseitig aus einer Grundschicht herausragenden polschichtbildenden Fäden oder Fasern definiert sind. Eine Polschicht kann dabei ein- oder beidseitig angeordnet sein. Bei einem Velours handelt es sich insbesondere um einen einseitigen Polstoff mit offenen Pol, geringer bis mittlerer Polschichtdicke, wobei die Pollänge mehr als 2 mm und bis zu 10 mm beträgt.

Ein spezielles Velours-Klebeband ist in der EP-B-1 022 835 beschrieben. Dieses bekannte Band hat einen bandförmigen textilen Träger, der auf seiner Oberseite klett fähige Schlaufen aufweist und auf dessen Unterseite eine Grundierungsschicht und auf der Grundierungsschicht eine selbstklebende Schicht aufgetragen ist. Die Grundierungsschicht weist ein spezifisches Flächengewicht von weniger als 20 g/m² auf. Als textiler Träger wird dabei bevorzugt ein Wirkvelours eingesetzt, das aus einer sogenannten Maschenseite und aus einer glatten Rückseite besteht. Die glatte Rückseite ist mit der Grundierungsschicht versehen, um die Verfestigung des Wirkvelours zu erreichen.

Velours-Klebebänder haben den Vorteil, ausgezeichnete Geräuschdämpfungseigenschaften und - insbesondere bei Einsatz von Polyamid als Fasermaterial - eine hohe Abriebbeständigkeit aufzuweisen. Sie haben aber den Nachteil, auf Grund der hohen Kosten für Velours relativ teuer zu sein. Zudem sind sie in der Regel nicht von Hand reißbar. Ihr Einsatz ist daher auf Spezialfälle beschränkt.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind. Als anwendungstechnisch wichtige Prüfungen sind in dieser Richtlinie beispielsweise Prüfmethoden für die Kompatibilität von Klebebändern mit elektrischen Fahrzeugleitungen sowie für die Chemikalienbeständigkeit, das Geräuschdämpfungsverhaten, das Fogging-Ve-halten und die Abriebbeständigkeit beschrieben.

Ein Klebeband der eingangs genannten Art ist in der EP-A-1 149 882 erwähnt, insofern sich dieses Dokument auf einen textilen Träger für Klebebänder bezieht. Dieser besteht aus einem Vliesstoff mit einer Faserschicht auf einer Oberflächenseite, der auf der anderen Oberflächenseite mit Klebmittel beschichtet und zu schmalen Bändern geschnitten wird. Dabei ist vorgesehen, dass auf der Oberfläche der Seite des Vliesstoffes, die der Klebstoffbeschichtung gegenüberliegt, vertikal zum Vliesstoffquerschnitt abstehende Faserteile als Faserschicht angeordnet sind, die über die gesamte Fläche eine hohe Dichte. Parallelität und gleichmäßige Höhe aufweisen, wobei ein oder beide Enden der F aserteile im Vliesstoffquerschnitt mechanisch eingebunden sind. Der textile Träger wird aus einer an sich bekannten Vliesstoffstruktur durch ein bekanntes Nadelverfahren hergestellt, wodurch er eine velourisierte Oberfläche aufweist, die für die Funktion des Abbaues von Druckkräften oder der Schallminderung besonders geeignet ist.

Konkrete Klebebänder der eingangs genannten Art sind allerdings der EP-A-1 149 882 nicht zu entnehmen; es werden nur jeweils beispielhaft die Herstellung und Eigenschaften verschiedener Träger beschrieben, für die dann eine Eignung zur Klebebandherstellung postuliert wird. Solche Klebebänder mögen auch auf sich "selbst wickelbar" sein, jedoch ist völlig ungewiss, wie sie sich bei einem Abwickeln von einer Klebebandrolle verhalten, indem sie beispielsweise zu einer Verblockung oder zum Ausreißen von Fasern aus dem Vliesträger neigen. Unter diesen Umständen lässt sich ein bekanntes Klebeband dieser Art kaum oder nur schwer verarbeiten oder bedarf zur Konfektionierung notwendigerweise eines zusätzlichen Interliners.

Der vorliegenden Erfindung liegt die Aufgabe zu Grunde, ein in der Herstellung wenig aufwändiges, auf sich selbst wickelbares Klebeband der eingangs genannten Art zu schaffen, das eine hohe Geräuschdämpfung aufweist und die klettfähige Verlegung von Kabelsätzen ermöglicht. Insbesondere soll dabei das erfindungsgemäße Klebeband auch die Anforderungen der vorstehend genannten Prüfrichtlinie LV 312 erfüllen.

Diese Aufgabe wird mit einem Klebeband der eingangs genannten Art gelöst, bei dem die Fasern eine mittlere Länge im Bereich von 50 bis 85 mm aufweisen und in der Polschicht eine Mischstruktur von offenen und geschlossenen Polen gebildet ist, in der ein Verhältnis der offenen und geschlossenen Pole durch ein im Bereich von 4.5 bis 16,0 liegendes Verhältnis der mittleren Länge der Fasern des Trägers zu einer Einstichtiefe der Nadeln eingestellt ist.

Auch einen entsprechenden Herstellungsverfahren wird erfinderische Bedeutung beigemessen.

Der Träger des erfindungsgemäßen Klebebandes ist durch die herausragenden Teile der Fasern aufgerauht - gewissermaßen velourisiert - und stellt als Textilstoff ein Hybrid in Bezug auf die oben beschriebenen Flach- oder Glattwaren und die Flor- oder Polwaren dar, in dem sich die Vorteile eines Vlieses mit denen eines Velours vereinigen.

Die Polschicht besteht dabei aus offenen, aus den Enden der Fasern gebildeten Polen und/oder aus geschlossenen, aus Schlaufen der Fasern gebildeten Polen und kann durch ein Herausziehen der Teile der Fasern gebildet sein. Bevorzugt können die Pole jedoch durch ein Herausstoßen der die Pole bildenden Faserteile mit Hilfe von mit Widerhaken versehenen Nadeln gebildet sein, wobei die Nadeln auf der polabgewandten Seite des Vlieses eingestochen werden. Hierzu ist auch ein spezielles, von der Firma Oskar Dilo KG industriell eingeführtes Nadelverfahren an sich bekannt, bei dem bei einem vertikalen Durchstecken des Vlieses mit den Nadeln unter dem Vlies, d. h. auf der Polseite, ein Bürstenband angeordnet ist, Dadurch bleibt die vertikale Anordnung der herausgestoßenen Faserteile erhalten, sie werden nicht umgelegt und die Gefahr ihrer Fixierung in schräger Lage durch nachfolgende Nadelstiche ist ausgeschlossen. Das Verfahren ist in "Melliand Literaturberichte" Nr, 9, 2002, S. 645-647 beschrieben und der gebildete Vlieswerkstoff ist in der deutschen Norm DIN 61211 genannt.

Überraschenderweise hat sich gezeigt, dass es trotz der velourartigen Polschicht des erfindungsgemäßen Klebebandes möglich ist, dieses ohne die Verwendung eines Interliners auf sich selbst zu einer Rolle und davon wieder herunter zu wickeln, ohne dass es dabei zu einem Herausziehen der Fasern käme. Dies wird auf die sich - insbesondere bei einem Verhältnis einer mittleren Mindestlänge der Fasern des Trägers zu einer Einstichtiefe der Nadeln im Bereich von 4,5 bis 16,0, vorzugsweise im Bereich von 8,0 bis 10,0 - einstellende bevorzugte Mischstruktur der Polschicht aus offenen und geschlossenen Polen zurückgeführt.

Die voluminöse, aber dichte und gleichmäßige, Struktur der Polschicht, für die sich bei einer Einstichtiefe der Nadeln von etwa 5 bis 10 mm eine Dicke ergibt, die im Bereich von 25 bis 100 Prozent der ursprünglichen Dicke des Vlieses liegt, führt vorteilhafterweise auch dazu, dass die Fasern der Polschicht sich beim Aufwickeln des erfindungsgemäßen Klebebandes nicht derart legen können, dass sie beim oder nach einem Abwickeln von einer Rolle in irgendeiner Weise wieder aufgerichtet werden müßten.

Die erfindungsgemäß ausgebildete Polschicht führt mit Vorteil somit insbesondere dazu, dass sich die Pole stets in einem Zustand darbieten, der eine Verklettung mit geeigneten komplementären Teilen gestattet, was sich günstig im Hinblick auf eine einfache Montage des erfindungsgemäßen Klebebandes auswirkt. Dies ist insbesondere dann der Fall, wenn eine Poldichte vorliegt, die sich aus einer Stichdichte der Nadeln im Bereich von 200 bis 1000 Stichen/cm², vorzugsweise von 300 bis 800 Stichen/cm², ergibt. Hierbei kann die Poldichte in erster Näherung mit der Stichdichte gleichgesetzt werden, bei genauerer Analyse des Nadelprozesses sind jedoch Abweichungen zwischen Pol- und Stichdichte möglich, die Werte bis zu etwa 30 Prozent erreichen können und darauf zurückzuführen sind, dass sowohl mit einem Nadelstich mehrere Fasern erfaßt werden, als auch Nadeln mehrmals an der gleichen Stelle stechen können.

Von den eingangs erwähnten bekannten Klebebändern unterscheidet sich ein erfindungsgemäßes Klebeband dadurch, dass durch die aus dem Vlies herausstehenden Fasern, insbesondere durch die spezielle Nadeltechnik zur Velourisierung des Klebebandträgers, primär keine Verfestigung des Vlieses bewirkt wird, sondern dass das Vlies bereits in verfestigtem Zustand vorliegen muß. Da Teile der Fasern aus dem Verbund herausgezogen werden, verändert sich die Bruchkraft des Trägers in Längs- und Querrichtung. Während die Bruchkraft in Längsrichtung leicht abnimmt, werden die Werte in Querrichtung durch die Umorientierung der Fasern erhöht. Der Betrag der Bruchkraft-Veränderung wird dabei durch die Einstichtiefe der Nadeln und die Stichdichte beeinflusst. Es hat sich dabei als vorteilhaft erwiesen, wenn der Träger - längs oder quer - eine Bruchkraft im Bereich von 15 bis 50 N/cm aufweist.

Insbesondere bei Nähvliesen kann eine mittlere Länge der Fasern im Bereich von 50 bis 85 mm liegen. Die Faserstärke kann insbesondere 3,3 bis 3,6 dtex betragen, wobei auch Anteile anderer Faserstärken vorhanden sein können. Die Fasern sind dabei oft gekräuselt, wodurch sich die effektive Länge etwas verringert. Bei einer Stichlänge von 1 mm und einer Fadenanzahl von 22 Fäden/25 mm, wie sie dabei vorliegen kann, ist demnach davon auszugehen, dass die Fasern mehrfach im Träger fixiert sind. Durch eine Einstichtiefe der zur Erzeugung der Polschicht eingesetzten Nadeln von 5 bis 10 mm wird diese Fixierung im Mittel etwas verringert, ist aber - wie die Praxis erweist - für ein auf sich selbst wickelbares Klebeband ausreichend, unter anderem auch deshalb, weil die Fasern durch die auf der polabgewandten Seite aufgebrachte Klebstoffbeschichtung zusätzlich festgehalten werden.

Das Flächengewicht des Trägers des erfindungsgemäßen Klebebandes kann insbesondere im Bereich von 50 bis 280 g/m² und eine mittlere, bei einem Auflagedruck von 2000 Pa gemessene Dicke des Trägers im Bereich von 0,2 bis 2,0 mm liegen. Der Träger kann dabei bevorzugt aus Polyester, Polypropylen oder Polyamid oder aus einer Mischung dieser Polymeren bestehen.

Das erfindungsgemäße Klebeband hat auch den Vorteil einer sehr geringen Schmutzanfälligkeit bei gleichzeitig im Vergleich zu den bekanntermaßen für Klebebandträger eingesetzten Velours günstigeren, durch den geringeren Herstellungsaufwand bedingten Preisen.

Durch einen hohen Anteil senkrecht aus der Vliesstoffebene herausstehender Faserteile mit durch die Einstichtiefe in relativ weitem Rahmen vorbestimmbarer Länge kann das erfindungsgemäße Klebeband auch eine Druck- oder Schlagbeanspruchung gut elastisch auffangen. Dies bewirkt wiederum ein gutes Geräuschdämpfungsverhalten.

Wenngleich auf verschiedenartige Weise verfestigte Vlieswerkstoffe, wie Vlies-Nähgewirke, insbesondere vom Typ "Malivlies", und Nadelvliese als Ausgangsbasis für den Träger dienen können, erhält man speziell bei der Verwendung eines erfindungsgemäß ausgebildeten Trägers auf der Basis eines Vlies-Faden-Nähgewirkes vom Typ "Maliwatt" ein gut handeinreißbares Klebeband, sofern der verwendete Nähfaden eine Stärke von 50 dtex hat und das Flächengewicht des Vlieses unter 200 g/m² liegt.

Was die Klebstoffbeschichtung betrifft, so können als druckempfindliche Haftklebstoffe Acrylatklebstoffe, insbesondere UV-vernetzbare Acrylatklebstoffe, Synthese- und auch Naturkautschukklebstoffe eingesetzt werden. Klebebänder mit Acrylatklebstoffen zeichnen sich durch niedrige Foggingwerte, eine hohe Resistenz gegen verschiedene Chemikalieneinflüsse und durch eine ausgezeichnete Kompatibilität mit verschiedenen Leitungen aus.

Um die bei der spiralförmigen Bewicklung von Kabelsätzen erforderlichen Haftwerte auf dem Bandrücken zu erreichen, wird vorzugsweise mit Auftragsgewichten von 60 bis 150 g/m², vorzugsweise von 70 bis 100 g/m², gearbeitet. Der Klebstoff kann sowohl direkt auf die nicht aufgerauhte Seite des Trägers beschichtet werden, als auch unter Zuhilfenahme eines Interliners im Transferverfahren.

Weitere vorteilhafte Ausführungen der Erfindung sind in den Unteransprüchen und der nachfolgenden speziellen Beschreibung enthalten. Anhand zweier Ausführungsbeispiele wird unter Bezugnahme auf die Zeichnung die Erfindung dabei näher erläutert.

Dabei zeigen
- Fig. 1: einen Querschnitt durch ein erfindungsgemäßes Klebeband und
- Fig. 2: einen Querschnitt durch den Träger eines erfindungsgemäßen Klebebandes bei der Herstellung der erfindungsgemäß vorgesehenen Polschicht.

In den verschiedenen Figuren der Zeichnung sind gleiche Teile stets auch mit den gleichen Bezugszeichen versehen, so dass sie in der Regel auch jeweils nur einmal beschrieben werden.

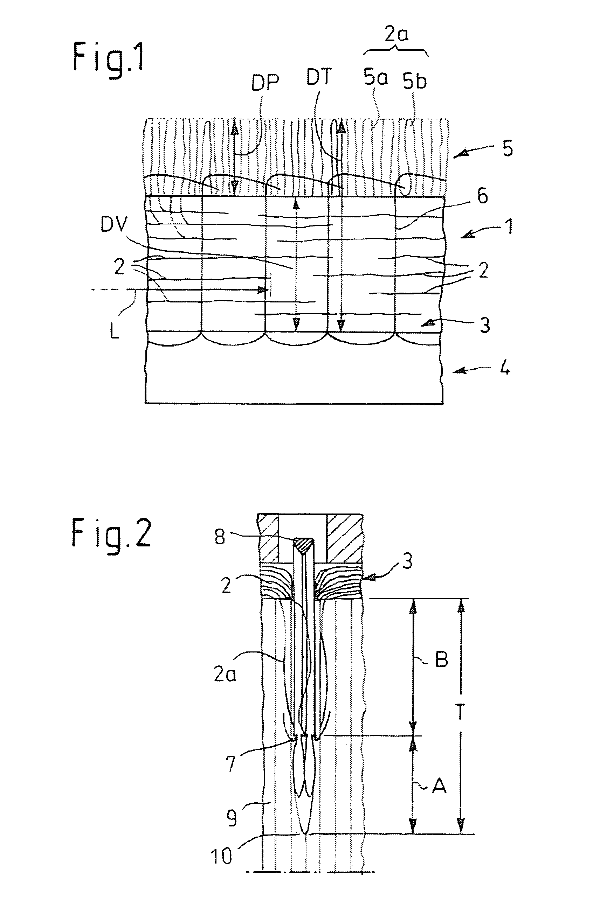

Wie zunächst aus Fig. 1 hervorgeht, weist ein erfindungsgemäßes auf sich selbst wickelbares textiles Klebeband einen Träger 1 auf, der aus einem verfestigten, aus Fasern 2 gebildeten Vlies 3 besteht. Auf einer Seite des Trägers 1 ist eine, insbesondere druckempfindliche Klebstoffbeschichtung 4 aufgebracht. Auf der der Klebstoffbeschichtung 4 gegenüber liegenden Seite des Trägers 1 ist eine Polschicht 5 ausgebildet ist, die aus Teilen 2a der Fasern des Vlieses 2 besteht, die aus dem Vlies 2 herausragen. Die Polschicht 5 besteht aus offenen, aus den Enden der Fasern 2 gebildeten Polen 5a und/oder aus geschlossenen, aus Schlaufen der Fasern 2 gebildeten Polen 5b.

Bei dem Vlies 3 handelt es sich insbesondere um ein Vlies-Faden-Nähgewirk vom Typ Maliwatt, was durch die dargestellten Bindefäden 6 verdeutlicht wird.

Der Träger 1 des erfindungsgemäßen Klebebandes ist, wie dies durch Fig. 2 veranschaulicht wird, durch ein Herausstoßen der herausstehenden Teile 2a der Fasern 2 mit Hilfe von mit Widerhaken 7 versehenen Nadeln 8, sogenannten Kronennadeln, gebildet. Dieser Vorgang, bei dem unter dem Vlies 3 insbesondere ein Bürstenband 9 angeordnet ist, wird auch als Velourisieren bezeichnet.

Unter einer Einstichtiefe T der Nadeln 8 wird der Abstand zwischen Nadelspitze und Oberfläche des Vlieses auf der Polseite verstanden. Die Fasern 2 werden durch die Nadeln theoretisch um einen Betrag B herausgestoßen, der um einen Abstand A zwischen der Nadelspitze 10 und einem an der Nadel 8 befindlichen Widerhaken 7 kleiner ist als der Abstand T Nadelspitze - Vliesoberfläche. Bei der praktischen Verfahrensführung des Nadelprozesses stellen sich aber durch verschiedene Einflüsse Faser-Ausziehlängen und damit Polschichtdicken DP ein, die geringer als die theoretische Ausziehlänge B sind.

Durch ein Verhältnis einer mittleren Länge L der Fasern 2 des Trägers 1 zur Einstichtiefe T der Nadeln 8 kann das Verhältnis der offenen Pole 5a und geschlossenen Pole 5b in der Polschicht 5 eingestellt werden. Letzteres ist besonders dann als optimal anzusehen, wenn das Verhältnis einer mittleren Länge L der Fasern 2 des Trägers 1 zur Einstichtiefe T der Nadeln 8 im Bereich von 4,5 bis 16,0, insbesondere von 8 bis 10, liegt. Die Fasern 2 des Trägers 1 können dabei insbesondere eine mittlere Länge L im Bereich von 50 bis 85 mm aufweisen.

Aus einer Einstichtiefe T der Nadeln 8 von etwa 5 bis 10 mm ergibt sich eine Dicke DP der Polschicht 5, die im Bereich von 25 bis 100 Prozent der ursprünglichen Dicke DV des Vlieses 3 liegt. Eine mittlere, bei einem Auflagedruck von 2000 Pa gemessene Dicke des Trägers kann dabei im Bereich von 0,2 bis 2,0 mm liegen.

Folgende Ausführungen eines erfindungsgemäßen Klebebandes wurden hergestellt und geprüft.

### Beispiel 1

Ein velourisiertes, d. h. mit einer Polschicht 5 versehenes, Nähvlies 3 mit einer Einstichtiefe T von 5,5 mm und einer Stichdichte von 600 Stichen/cm² sowie mit einem Flächengewicht von 130 g/m² wurde auf seiner nicht aufgerauhten Seite mit ca. 80 g/m² eines UV-vernetzenden Acrylatklebstoffs beschichtet. Das Acrylat wurde zur Klebebeschichtung 4 vernetzt und das Material auf sich selbst gewickelt. Anschließend wurde die so gebildete Rolle in gewünschter Weise als auf sich selbst gewickeltes Klebeband konfektioniert.

### Beispiel 2

Ein velourisiertes, d. h. mit einer Polschicht 5 versehenes, Nähvlies 3 mit einer Einstichtiefe T von 8 mm und einer Stichdichte von 600 Stichen/cm² sowie mit einem Flächengewicht von 130 g/m² wurde auf der nicht aufgerauhten Seite mit ca. 120 g/m² eines Schmelzklebstoffs auf Synthesekautschuk-Basis als Klebstoffbeschichtung 4 versehen. Das Material wurde auf sich selbst gewickelt. Anschließend wurde die so gebildete Rolle in gewünschter Weise als auf sich selbst gewickeltes Klebeband konfektioniert.

In der nachstehenden Tabelle 1 sind die technischen Eigenschaften der so hergestellten Klebebänder (B1 - Beispiel 1, B2 - Beispiel 2) im Vergleich mit einem Standard-Veloursklebeband (S1) gemäß EP-B-1 022 835 und einem Standard-Nähvliesklebeband (S2) gemäß EP-B-0 668 336 aufgeführt.

Unter dem in Spalte 1 der Tabelle genannten Aplix 224 wird dabei ein spezielles Pilzkopfhakenteil der Firma Aplix verstanden, das zur Bestimmung der entsprechenden Kenngrößen der ausgebideten Klettverbindung benutzt wurde.

Zur gemessenen Dicke DT ist festzustellen, dass eine signifikante Zunahme der Dicke DT eines erfindungsgemäßen Klebebandes (B1, B2) gegenüber einem nicht velourisierten Band (S2) nur bei einer Messung nach DIN EN ISO 2286-3, die bei einem geringeren Auflagedruck als die Messung nach DIN EN 1942 erfolgt, feststellbar istwie dies ein Vergleich der beiden Zeilen für die Dickenmessung zeigt. Daher ist auch in der Prüfrichtlinie LV 312 für Klebebänder mit leichter kompressiblen Trägern, wie Veloursträgern, ausdrücklich eine Messung nach DIN EN ISO 2286-3 vorgesehen.

**Tabelle 1**

| Prüfgröße | Methode | Einheit | B1 | B2 | S1 | S2 |
|---|---|---|---|---|---|---|
| Gewicht, Träger 1 | EN ISO 2286-1 | g/m² | 130 | 130 | 160 | 130 |
| Dicke DT | DIN EN 1942 | Mm | 0,5 | 0,5 | 0,7 | 0,5 |
| Dicke DT | EN ISO 2286-3 | Mm | 0,9 | 1,10-1,15 | 1,2 | 0,8 |
| Bruchkraft | DIN EN 14410 | N/cm | 20-30 | 20-30 | 80-95 | 30-40 |
| Reißdehnung | DIN EN 14410 | % | 20-30 | 20-30 | 35-45 | 15-25 |
| Handeinreißbarkeit | LV 312 | - | ja | ja | Nein | ja |
| Klebkraft, Stahl | DIN EN 1939 | N/cm | 2-3 | 4-7 | 1-2 | 2-3 |
| Klebkraft, Bandrücken | DIN EN 1939 | N/cm | 4-5 | 9-13 | 1-3 | 4-5 |
| Klettkraft mit Aplix 224 | EN 12242 | N/cm | 1,3-1,9 | 2,8-3,5 | 5-7 | 0,2-0,3 |
| Klettscherfestigkeit mit Aplix 224 | EN 13780 | Ncm⁻² | 15-16 | 20-30 | 50-55 | 4-5 |
| Abriebbeständigkeit | LV 312 | Hubzahl | 300-400 | 300-400 | 8000-15000 | 500-700 |
| Geräuschdämpfung | LV 312 | dB (A) | 14-16 | 14-16 | 19-21 | 8-11 |

Beide Beispielausführungen zeigen, dass ein erfindungsgemäßes Klebeband eine zur Bewicklung von Kabelsätzen ausreichende Zugfestigkeit und Haftung auf dem Bandrücken aufweist. Durch seinen speziellen Aufbau verbinden sich dabei die positiven Eigenschaften bereits im Einsatz befindlicher Nähvliesklebebänder, wie Handreißbarkeit, geringer Herstellungsaufwand, mit denen üblicher Veloursklebebänder, wie erhöhte Geräuschdämpfung und Klettfähigkeit.

Die Erfindung ist nicht auf die dargestellten Ausführungsbeispiele beschränkt, sondern umfaßt auch alle im Sinne der Erfindung gleichwirkenden Ausführungen. Auch einem Kabelbaum, umfassend mehrere, jeweils mit einer Isolierung versehene, insbesondere elektrische, Leitungen und ein Klebeband, mit dem diese Leitungen umwickelt sind und das die erfindungsgemäßen Merkmale aufweist, wird erfinderische Bedeutung beigemessen.

Allerdings beschränkt sich die Verwendung erfindungsgemäßer Klebebänder nicht auf die Bewicklung von Kabelsätzen. Vielmehr sind sie auf Grund ihrer guten dämpfenden Eigenschaften und auf Grund ihrer Kletteigenschaften auch für weitere Einsatzzwecke, z. B. bei der Geräuschdämpfung und in der Befestigungstechnik, geeignet.

Eine Grundierungsschicht braucht bei dem erfindungsgemäßen Klebeband nicht vorgesehen zu werden, könnte aber optional vorhanden sein

### Bezugszeichen

- 1: Träger
- 2: Fasern von 1
- 2a: Teile von 2, aus 3 herausstehend
- 3: Vlies von 1
- 4: Klebstoffbeschichtung
- 5: Polschicht von 1
- 5a: offene Pole von 5 (Enden von 2)
- 5b: offene Pole von 5 (Schlaufen von 2)
- 6: Bindefaden von 3
- 7: Widerhaken von 8
- 8: Nadel
- 9: Bürstenband
- 10: Spitze von 8

- A: Abstand zwischen 10 und 7
- B: theoretische Ausstoßlänge
- DP: Dicke von 5
- DT: Dicke von 1
- DV: Dicke von 3
- T: Einstichtiefe von 8

## Patentansprüche

1. Textiles Klebeband, mit einem Träger (1), der aus einem verfestigten, aus Fasern (2) gebildeten Vlies (3) besteht, und mit einer auf einer Seite des Trägers (1) aufgebrachten Klebstoffbeschichtung (4), wobei auf der der Klebstoffbe-Schichtung (4) gegenüber liegenden Seite des Trägers (1) durch ein Herausziehen oder -stoßen von Teilen (2a) der Fasern (2) mit Hilfe von mit Widerhaken (7) versehenen Nadeln (8) eine Polschicht (5) ausgebindet ist, die aus Teilen (2a) der Fasern (2) besteht, welche aus dem Vlies (3) herausragen, und die sowohl offene aus Enden der Fasern (2) gebildete Pole (5a) als auch geschlossene, aus Schlaufen der Fasern (2) gebildete Pole (5b) umfasst,
**dadurch gekennzeichnet, dass** die Fasern (2) eine mittlere Länge (L) im Bereich von 50 bis 85 mm aufweisen und in der Polschicht (5) eine Mischstruktur von offenen und geschlossenen Polen (5a, 5b) gebildet ist, in der ein Verhältnis der offenen und geschlossenen Pole (5a, 5b) durch ein im Bereich von 4,5 bis 16,0 liegendes Verhältnis der mittleren Länge (L) der Fasern (2) das Trägers (1) zu einer Einstichtiefe (T) der Nadeln (8) eingestellt ist.

2. Klebeband nach Anspruch 1.
**dadurch gekennzeichnet, dass** eine Dicke (DP) der Polschicht (5) im Bereich von 25 bis 100 Prozent der ursprünglichen Dicke (DV) des Vlieses (3) liegt gemessen nach DIN EN ISO 2286-3.

3. Klebeband nach Anspruch 1 oder 2,
**dadurch gekennzeichnet dass** eine Poldichte im Bereich von 200 bis 1000 Polen/cm², vorzugsweise von 300 bis 800 Polen/cm². liegt.

4. Klebeband nach einem der Ansprüche 1 bis 3,
**dadurch gekennzeichnet, dass** ein Flächengewicht des Trägers (1) im Bereich von 50 bis 280 g/m² legt.

5. Klebeband nach einem der Ansprüche 1 bis 4,
**dadurch gekennzeichnet, dass** eine mittlere, bei einem Auflagedruck von 2000 Pa gemessene Dicke (DT) des Trägers (1) im Bereich von 0,2 bis 2,0 man liegt.

6. Klebeband nach einem der Ansprüche 1 bis 5.
**dadurch gekennzeichnet, dass** der Träger (1) aus einem Vlies-Faden-Nähgewirk, insbesondere vom Typ Maliwatt, gebildet ist.

7. Klebeband nach einem der Ansprüche 1 bis 5,
**dadurch gekennzeichnet, dass** der Träger (1) aus einem Vlies-Nähgewirk, insbesondere vom Typ Malivlies, gebildet ist.

8. Klebeband nach einem der Ansprüche 1 bis 5,
**dadurch gekennzeichnet dass** der Träger (1) aus einem Nadelvlies gebildet ist.

9. Klebeband nach einem der Ansprüche 1 bis 5,
**dadurch gekennzeichnet, dass** der Träger (1) aus einem Nähvlies gebildet ist.

10. Klebeband nach Anspruch 9,
**dadurch gekennzeichnet dass** die Fasern (2) bei einer Stichlänge von 1 mm und einer Fadenanzahl von 22 Fäden/25 mm mehrfach im Träger (1) fixiert sind.

11. Klebeband nach einem der Ansprüche 1 bis 10,
**dadurch gekennzeichnet, dass** der Träger (1) aus Polyester, Polypropylen oder Polyamid oder aus einer Mischung dieser Polymeren besteht.

12. Klebeband nach einem der Ansprüche 1 bis 11,
**dadurch gekennzeichnet, dass** das Verhältnis der mittleren Länge (L) der Fasern (2) des Trägers (1) zur Einstichtiefe (T) der Nadeln (8) im Bereich von 8 bis 10, liegt.

13. Klebeband nach einem der Ansprüche 1 bis 12,
**dadurch gekennzeichnet, dass** die Fasern (2) des Trägers (1) überwiegend eine Feinheit im Bereich von 3,3 bis 3,6 dtex aufweisen

14. Klebeband nach einem der Ansprüche 1 bis 13,
**dadurch gekennzeichnet, dass** der Träger (1) eine Bruchkraft im Bereich von 15 bis 50 N/cm aufweist.

15. Klebeband nach einem der Ansprüche 1 bis 14,
**dadurch gekennzeichnet, dass** die Klebstoffbeschichtung (4) aus einen Haftklebstoff auf der Basis von Naturkautschuk, Synthesekautschuk oder Polyacrylat besteht.

16. Klebeband nach einem der Ansprüche 1 bis 15,
**dadurch gekennzeichnet, dass** die Klebstoffbeschichtung (4) mit einem Flächengewicht von 70 bis 120 g/m² aufgetragen ist.

17. Kabelbaum, umfassend mehrere, jeweils mit einer Isolierung versehene, insbesondere elektrische, Leitungen und ein Klebeband, mit dem diese Leitungen umwickelt sind,
**dadurch gekennzeichnet, dass** das Klebeband die Merkmale eines der Ansprüche 1 bis 16 aufweist.

18. Klebebandrolle, umfassend ein Klebeband nach einem der Ansprüche 1 bis 16.
**dadurch gekennzeichnet, dass** das Klebeband ohne Interliner auf sich selbst gewickelt ist.

19. Verfahren zur Herstellung eines textilen Klebebandes, insbesondere eines Klebebandes nach einem der Ansprüche 1 bis 16, wobei zunächst ein Träger (1) hergestellt wird, der aus einem verfestigten, aus Fasern (2) gebildeten Vlies (3) besieht, wobei auf einer Seite des Vlieses (3) durch ein Herausziehen oder -stoßen von Teilen (2a) der Fasern (2) mit Hilfe von mit Widerhaken (7) versehenen Nadeln (8) eine Polschicht (5) gebildet wird, die aus Teilen (2a) der Fasern (2) besteht, welche aus dem Vlies (3) herausragen, und die sowohl offene, aus Enden der Fasern (2) gebildete Pole (5a), als auch geschlossene, aus Schlaufen der Fasern (2) gebildete Pole (5b) umfasst, und wobei auf die der Polschicht (5) gegenüber liegende Seite des Trägers (1) eine Klebstoffbeschichtung (4) aufgebracht wird,
**dadurch gekennzeichet**, dass in der Polschicht (5) eine Mischstruktur gebildet wird, in der ein Verhältnis der offenen und geschlossenen Pole (5a, 5b) durch ein im Bereich von 4,5 bis 16,0 liegendes Verhältnis einer mittleren Länge (L) der Fasern (2) des Trägers (1) zu einer Einstichtiefe (T) der Nadeln (8) eingestellt wird.

20. Verfahren nach Anspruch 19,
**dadurch gekennzeichnet, dass** zur Bildung des Trägers (1) ein Vlies (3) verwendet wird, dessen Fasern (2) eine mittlere Länge (L) im Bereich von 50 bis 85 mm aufweisen,

21. Verfahren nach Anspruch 19 oder 20.
**dadurch gekennzeichnet, dass** durch eine Einstichtiefe (T) der Nadeln (8) im Bereich von 5 bis 10 mm eine Dicke (DP) der Polschicht (5) eingestellt wird, die im Bereich von 25 bis 100 Prozent der ursprünglichen Dicke (DV) des Vlieses (3) liegt, gemessen nach DIN EN ISO 2286-3.

22. Verfahren nach einem der Ansprüche 19 bis 21.
**daduch gekennzeichnet,** dass eine Stichdichte der Nadeln (8) im Bereich von 200 bis 1000 Stichen/cm², vorzugsweise von 300 bis 800 Stichen/cm², liegt.

23. Verfahren nach einem der Ansprüche 19 bis 22,
**dadurch gekennzeichnet, dass** der Träger (1) aus einem Vlies-Faden-Nähgewirk, insbesondere vom Typ Maliwatt, gebildet wird.

24. Verfahren nach einem der Ansprüche 19 bis 22,
**dadurch gekennzeichnet, dass** der Träger (1) aus einem Vlies-Nähgewirk, insbesondere vom Typ Malivlies, gebildet wird.

25. Verfahren nach einem der Ansprüche 19 bis 22,
**dadurch gekennzeichnet dass** der Träger (1) aus einem Nadelvlies gebildet wird.

26. Verfahren nach einem der Ansprüche 19 bis 22,
**dadurch gekennzeichnet, dass** der Träger (1) aus einem Nähvlies gebildet wird.

27. Klebeband nach Anspruch 26,
**dadurch gekennzeichnet, dass** die Fasern (2) bei einer Stichlänge von 1 mm und einer Fadenanzahl von 22 Fäden/25 mm mehrfach im Träger (1) fixiert sind.

28. Verfahren nach einem der Ansprüche 19 bis 27,
**dadurch gekennzeichnet, dass** der Träger (1) aus Polyester, Polypropylen oder Polyamid oder aus einer Mischung dieser Polymeren hergestellt wird.

29. Verfahren nach einem der Ansprüche 19 bis 28,
**dadurch gekennzeichnet, dass** das Verhältnis der mittleren Länge (L) der Fasern (2) des Trägers (1) zur Einstichtiefe (T) der Nadeln (8) im Bereich von 8 bis 10 liegt.

30. Verfahren nach einem der Ansprüche 19 bis 29,
**dadurch gekennzeichnet, dass** zur Bildung des Trägers (1) ein Vlies (3) eingesetzt wird, dessen die Fasern (2) überwiegend eine Feinheit im Bereich von 3,3 bis 3,6 dtex aufweisen.

31. Verfahren nach einem der Ansprüche 19 bis 30,
**dadurch gekennzeichnet, dass** im Träger (1) eine Bruchkraft im Bereich von 15 bis 50 N/cm eingestellt wird.

32. Verfahren nach einem der Ansprüche 19 bis 31,
**dadurch gekennzeichnet, dass** die Klebstoffbeschichtung (4) aus einem Haftklebstoff auf der Basis von Naturkautschuk, Synthesekautschuk oder Polyacrylat hergestellt wird.

33. Verfahren nach einem der Ansprüche 19 bis 32,
**dadurch gekennzeichnet, dass** die Klebstotffbeschichtung (4) mit einem Flächengewicht von 60 bis 150 g/m². vorzugsweise von 70 bis 120 g/m². aufgetragen wird.

## Claims

1. A textile adhesive tape, with a backing (1) which consists of a consolidated non-woven fabric (3) formed from fibres (2), and with an adhesive coating (4) applied to one side of the backing (1), with a pile layer (5) being formed on the side of the backing (1) located opposite the adhesive coating (4) by pulling out or pushing out parts (2a) of the fibres (2) with the aid of needles (8) provided with barbs (7), which layer consists of parts (2a) of the fibres (2) which project from the non-woven fabric (3), and comprises both the open pile (5a) formed from ends of the fibres (2) and the closed pile (5b) formed from loops of the fibres (2),
**characterised in that** the fibres (2) have an average length (L) in the range from 50 to 85 mm and a mixed structure of open and closed piles (5a, 5b) is formed in the pile layer (5), in which structure a ratio of the open and closed pile (5a, 5b) is set by a ratio of the average length (L) of the fibres (2) of the backing (1) to a penetration depth (T) of the needles (8) lying in the range from 4.5 to 16.0.

2. An adhesive tape according to Claim 1,
**characterised in that** a thickness (DP) of the pile layer (5) lies in the range from 25 to 100 percent of the original thickness (DV) of the non-woven fabric (3), measured in accordance with DIN EN ISO 2286-3.

3. An adhesive tape according to Claim 1 or 2,
**characterised in that** a pile density lies in the range from 200 to 1000 piles/cm², preferably of 300 to 800 piles/cm².

4. An adhesive tape according to one of Claims 1 to 3,
**characterised in that** a weight per unit area of the backing (1) lies in the range from 50 to 280 g/m².

5. An adhesive tape according to one of Claims 1 to 4,
**characterised in that** an average thickness (DT), measured at a contact pressure of 2000 Pa, of the backing (1) lies in the range from 0.2 to 2.0 mm.

6. An adhesive tape according to one of Claims 1 to 5,
**characterised in that** the backing (1) is formed from a non-woven/thread/stitch-bonded fabric, in particular of Maliwatt type.

7. An adhesive tape according to one of Claims 1 to 5,
**characterised in that** the backing (1) is formed from a non-woven/stitch-bonded fabric, in particular of Malivlies type.

8. An adhesive tape according to one of Claims 1 to 5,
**characterised in that** the backing (1) is formed from a needlefelt.

9. An adhesive tape according to one of Claims 1 to 5,
**characterised in that** the backing (1) is formed from a stitched non-woven.

10. An adhesive tape according to Claim 9,
**characterised in that** the fibres (2) for a stitch length of 1 mm and a thread count of 22 threads/25 mm are fixed multiple times in the backing (1).

11. An adhesive tape according to one of Claims 1 to 10,
**characterised in that** the backing (1) is made of polyester, polypropylene or polyamide or of a mixture of these polymers.

12. An adhesive tape according to one of Claims 1 to 11,
**characterised in that** the ratio of the average length (L) of the fibres (2) of the backing (1) to the penetration depth (T) of the needles (8) lies in the range from 8 to 10.

13. An adhesive tape according to one of Claims 1 to 12,
**characterised in that** the fibres (2) of the backing (1) have predominantly a fineness in the range of 3.3 to 3.6 dtex.

14. An adhesive tape according to one of Claims 1 to 13,
**characterised in that** the backing (1) has a breaking force in the range of 15 to 50 N/cm.

15. An adhesive tape according to one of Claims 1 to 14,
**characterised in that** the adhesive coating (4) consists of a pressure-sensitive adhesive based on natural rubber, synthetic rubber or polyacrylate.

16. An adhesive tape according to one of Claims 1 to 15,
**characterised in that** the adhesive coating (4) is applied with a weight per unit area of 70 to 120 g/m².

17. A cable harness, comprising a plurality of in particular electric cables each provided with an insulation, and an adhesive tape with which these lines are wound,
**characterised in that** the adhesive tape has the features of one of Claims 1 to 16.

18. A roll of adhesive tape, comprising an adhesive tape according to one of Claims 1 to 16,
**characterised in that** the adhesive tape is wound on itself without an interliner.

19. A method for producing a textile adhesive tape, in particular an adhesive tape according to one of Claims 1 to 16, wherein first of all a backing (1) is produced which consists of a consolidated non-woven fabric (3) formed from fibres (2), with a pile layer (5) being formed on one side of the non-woven fabric (3) by pulling out or pushing out parts (2a) of the fibres (2) with the aid of needles (8) provided with barbs (7), which layer consists of parts (2a) of the fibres (2) which project from the non-woven fabric (3), and comprises both the open pile (5a) formed from ends of the fibres (2) and the closed pile (5b) formed from loops of the fibres (2), and with an adhesive coating (4) being applied on the side of the backing (1) which is located opposite the pile layer (5), **characterised in that** a mixed structure is formed in the pile layer (5), in which structure a ratio of the open and closed pile (5a, 5b) is set by a ratio of an average length (L) of the fibres (2) of the backing (1) to a penetration depth (T) of the needles (8) lying in the range from 4.5 to 16.0.

20. A method according to Claim 19,
**characterised in that** a non-woven fabric (3), the fibres (2) of which have an average length (L) in the range from 50 to 85 mm, is used to form the backing (1).

21. A method according to Claim 19 or 20,
**characterised in that** a thickness (DP) of the pile layer (5) which lies in the range of 25 to 100 percent of the original thickness (DV) of the non-woven fabric (3), measured in accordance with DIN EN ISO 2286-3, is set in the range from 5 to 10 mm by a penetration depth (T) of the needles (8).

22. A method according to one of Claims 19 to 21,
**characterised in that** a stitch density of the needles (8) lies in the range from 200 to 1000 stitches/cm², preferably from 300 to 800 stitches/cm².

23. A method according to one of Claims 19 to 22,
**characterised in that** the backing (1) is formed from a non-woven/thread/stitch-bonded fabric, in particular of Maliwatt type.

24. A method according to one of Claims 19 to 22,
**characterised in that** the backing (1) is formed from a non-woven/stitch-bonded fabric, in particular of Malivlies type.

25. A method according to one of Claims 19 to 22,
**characterised in that** the backing (1) is formed from a needlefelt.

26. A method according to one of Claims 19 to 22,
**characterised in that** the backing (1) is formed from a stitched non-woven.

27. An adhesive tape [sic] according to Claim 26,
**characterised in that** the fibres (2) for a stitch length of 1 mm and a thread count of 22 threads/25 mm are fixed multiple times in the backing (1).

28. A method according to one of Claims 19 to 27,
**characterised in that** the backing (1) is made of polyester, polypropylene or polyamide or of a mixture of these polymers.

29. A method according to one of Claims 19 to 28,
**characterised in that** the ratio of the average length (L) of the fibres (2) of the backing (1) to the penetration depth (T) of the needles (8) lies in the range from 8 to 10.

30. A method according to one of Claims 19 to 29,
**characterised in that** a non-woven fabric (3), the fibres (2) of which have predominantly a fineness in the range of 3.3 to 3.6 dtex, is used for forming the backing (1).

31. A method according to one of Claims 19 to 30,
**characterised in that** a breaking force in the range from 15 to 50 N/cm is set in the backing (1).

32. A method according to one of Claims 19 to 31,
**characterised in that** the adhesive coating (4) consists of a pressure-sensitive adhesive on the basis of natural rubber, synthetic rubber or polyacrylate.

33. A method according to one of Claims 19 to 32,
**characterised in that** the adhesive coating (4) is applied with a weight per unit area of 60 to 150 g/m², preferably of 70 to 120 g/m².

## Revendications

1. Ruban adhésif textile, comprenant un support (1) qui consiste en un non-tissé (3) consolidé formé de fibres (2), et un enduit de colle (4) appliqué sur une face du support (1), sachant que le ruban dans lequel est réalisée une couche de poils (5), sur la face du support (1) opposée à l'enduit de colle (4), en extrayant ou en ôtant des parties (2a) des fibres (2) à l'aide d'aiguilles (8) dotées de barbes, ladite couche de poils consistant en des parties (2a) des fibres (2) dépassant du non-tissé (3) et qui comprend aussi bien des poils ouverts (5a) formés par les extrémités des fibres (2) que des poils fermés (5b) formés par des boucles des fibres (2),
**caractérisé en ce que** les fibres (2) présentent une longueur moyenne (L) dans l'intervalle de 50 à 85 mm, et **en ce que** dans la couche de poils (5), une structure mixte de poils ouverts et fermés (5a, 5b) est formée, dans laquelle un rapport des poils ouverts et fermés (5a, 5b) est ajusté par un rapport de la longueur moyenne (L) des fibres (2) du support (1) à la profondeur de piquage (T) des aiguilles (8) situé dans l'intervalle de 4,5 à 16,0.

2. Ruban adhésif selon la revendication 1,
**caractérisé en ce qu'**une épaisseur (DP) de la couche de poils (5) est comprise dans un intervalle de 25 à 100 % de l'épaisseur d'origine (DV) du non-tissé (3), épaisseurs mesurées d'après DIN EN ISO 2286-3.

3. Ruban adhésif selon la revendication 1 ou 2,
**caractérisé en ce qu'**une densité de poils est comprise dans l'intervalle de 200 à 1000 poils/cm², de préférence de 300 à 800 poils/cm².

4. Ruban adhésif selon l'une quelconque des revendications 1 à 3,
**caractérisé en ce qu'**un poids surfacique du support (1) est compris dans l'intervalle de 50 à 280 g/m².

5. Ruban adhésif selon l'une quelconque des revendications 1 à 4,
**caractérisé en ce qu'**une épaisseur moyenne (DT) du support (1), mesurée pour une pression d'application de 2000 Pa, est comprise dans l'intervalle de 0,2 à 2,0 mm.

6. Ruban adhésif selon l'une quelconque des revendications 1 à 5,
**caractérisé en ce que** le support (1) est formé en un tricotage cousu de non-tissé et de fils en particulier du type Maliwatt.

7. Ruban adhésif selon l'une quelconque des revendications 1 à 5,
**caractérisé en ce que** le support (1) est formé d'un tricotage cousu de non-tissé, en particulier du type Malivlies.

8. Ruban adhésif selon l'une quelconque des revendications 1 à 5,
**caractérisé en ce que** le support (1) est formé d'un non-tissé aiguilleté.

9. Ruban adhésif selon l'une quelconque des revendications 1 à 5,
**caractérisé en ce que** le support (1) est formé d'un non-tissé cousu.

10. Ruban adhésif selon la revendication 9,
**caractérisé en ce que** les fibres (2) sont fixées plusieurs fois dans le support (1) moyennant une longueur de point de 1 mm et un nombre de fils de 22 fils par 25 mm.

11. Ruban adhésif selon l'une quelconque des revendications 1 à 10,
**caractérisé en ce que** le support (1) est réalisé en polyester, en polypropylène ou en polyamide, ou en un mélange de ces polymères.

12. Ruban adhésif selon l'une quelconque des revendications 1 à 11,
**caractérisé en ce que** le rapport de la longueur moyenne (L) des fibres (2) du support (1) à la profondeur de piquage (T) des aiguilles (8) est compris dans l'intervalle de 8 à 10.

13. Ruban adhésif selon l'une quelconque des revendications 1 à 12,
**caractérisé en ce que** les fibres (2) du support (1) présentent en majorité une finesse dans l'intervalle de 3,3 à 3,6 dtex.

14. Ruban adhésif selon l'une quelconque des revendications 1 à 13,
**caractérisé en ce que** le support (1) présente une force de rupture dans l'intervalle de 15 à 50 N/cm.

15. Ruban adhésif selon l'une quelconque des revendications 1 à 14,
**caractérisé en ce que** l'enduit de colle (4) consiste en une colle adhésive à base de caoutchouc naturel, de caoutchouc de synthèse ou de polyacrylate.

16. Ruban adhésif selon l'une quelconque des revendications 1 à 15,
**caractérisé en ce que** l'enduit de colle (4) est appliqué avec un poids surfacique de 70 à 120 g/m².

17. Faisceau de câbles, comprenant plusieurs fils, en particulier électriques, chacun doté d'une isolation, et un ruban adhésif avec lequel ces fils sont enveloppés,
**caractérisé en ce que** le ruban adhésif présente les caractéristiques de l'une quelconque des revendications 1 à 16.

18. Bobine de ruban adhésif comprenant un ruban adhésif selon l'une quelconque des revendications 1 à 16,
**caractérisée en ce que** le ruban adhésif est bobiné sur lui-même sans séparateur.

19. Procédé de fabrication d'un ruban adhésif, en particulier d'un ruban adhésif selon l'une quelconque des revendications 1 à 16, dans lequel on fabrique d'abord un support (1) qui consiste en un non-tissé (3) consolidé formé de fibres (2), on forme sur une face du non-tissé (3), une couche de poils (5) en extrayant ou en chassant des parties (2a) des fibres (2) à l'aide d'aiguilles (8) dotées de barbes (7), cette couche de poils consistant en parties (2a) des fibres (2) dépassant du non-tissé (3), et comprenant aussi bien des poils ouverts (5a) formés par des extrémités des fibres (2), que des poils fermés (5b) formés par des boucles des fibres (2), et dans lequel on applique un enduit de colle (14) sur la face du support (1) se trouvant à l'opposé de la couche de poils (5),
**caractérisé en ce que** dans la couche de poils (5) est formée une structure mixte dans laquelle un rapport des poils ouverts et fermés (5a, 5b) est ajusté par un rapport d'une longueur moyenne (L) des fibres (2) du support (1) à une profondeur de piquage (T) des aiguilles (8) compris dans l'intervalle de 4,5 à 16.

20. Procédé selon la revendication 19,
**caractérisé en ce que** pour la formation du support (1), on utilise un non-tissé (3) dont les fibres (2) présentent une longueur moyenne (L) dans l'intervalle de 50 à 85 mm.

21. Procédé selon la revendication 19 ou 20,
**caractérisé en ce que** par une profondeur de piquage (T) des aiguilles (8) dans l'intervalle de 5 à 10 mm est ajustée une épaisseur (DP) de la couche de poils (5) qui est comprise dans l'intervalle de 25 à 100 % de l'épaisseur d'origine (DV) du non-tissé (3), épaisseurs mesurées selon DIN EN ISO 2286-3.

22. Procédé selon l'une quelconque des revendications 19 à 21,
**caractérisé en ce que** la densité de piquage des aiguilles (8) est comprise dans l'intervalle de 200 à 1000 piqûres/cm², de préférence de 300 à 800 piqûres/cm².

23. Procédé selon l'une quelconque des revendications 19 à 22,
**caractérisé en ce que** le support (1) est formé d'un tricotage cousu de non-tissé et de fils, en particulier de type Maliwatt.

24. Procédé selon l'une quelconque des revendications 19 à 22,
**caractérisé en ce que** le support (1) est formé d'un tricotage cousu de non-tissé, en particulier de type Malivlies.

25. Procédé selon l'une quelconque des revendications 19 à 22,
**caractérisé en ce que** le support (1) est formé d'un non-tissé aiguilleté.

26. Procédé selon l'une quelconque des revendications 19 à 22,
**caractérisé en ce que** le support (1) est formé d'un non-tissé cousu.

27. Procédé selon la revendication 26,
**caractérisé en ce que** les fibres (2) sont fixées plusieurs fois sur le support (1) moyennant une longueur de point de 1 mm et un nombre de fils de 22 fils par 25 mm.

28. Procédé selon l'une quelconque des revendications 19 à 27,
**caractérisé en ce que** le support (1) est fabriqué en polyester, en polypropylène ou en polyamide, ou en un mélange de ces polymères.

29. Procédé selon l'une quelconque des revendications 19 à 28,
**caractérisé en ce que** le rapport de la longueur moyenne (L) des fibres (2) du support (1) à la profondeur de piquage (T) des aiguilles (8) est compris dans l'intervalle de 8 à 10.

30. Procédé selon l'une quelconque des revendications 19 à 29,
**caractérisé en ce que** pour la formation du support (1), on utilise un non-tissé (3) dont les fibres (2) présentent en majorité une finesse dans l'intervalle de 3,3 à 3,6 dtex.

31. Procédé selon l'une quelconque des revendications 19 à 30,
**caractérisé en ce que** dans le support (1) est réglée une force de rupture dans l'intervalle de 15 à 50 N/cm.

32. Procédé selon l'une quelconque des revendications 19 à 31,
**caractérisé en ce que** l'enduit de colle (4) consiste en une colle adhésive à base de caoutchouc naturel, de caoutchouc synthétique ou de polyacrylate.

33. Procédé selon l'une quelconque des revendications 19 à 32,
**caractérisé en ce que** l'enduit de colle (4) est appliqué avec un poids surfacique de 60 à 150 g/m², de préférence de 70 à 120 g/m².
